# EUROPEAN PATENT APPLICATION

(11) **EP 4 821 607 A1**
(43) Date of publication of application: **14.10.2026**
(21) Application number: 25382381.9
(22) Date of filing: 11.04.2025
(51) Int. Cl.: B05B 13/02, A61J 3/00, B01J 2/00

(54) **AN APPARATUS FOR COATING AND METHODS FOR COATING TABLETS WITH THE APPARATUS**

(71) Applicant: ROMACO TECPHARM, S.L., 08191 Rubí (ES)
(72) Inventor: CUADRADO FERNÁNDEZ, Pedro, 08020 Barcelona (ES); GARCIA I GARCIA, Albert, 08755 Castellbisbal, Barcelona (ES); GÓMEZ DIEGO, Eduardo, 39690 Villaescusa, Cantabria (ES)
(74) Representative: ABG Intellectual Property Law, S.L.

(57) **Abstract**

An apparatus (100, 101) for coating tablets (1), comprising a chamber (10) housing a rotary drum (20), having a perforated wall (21), arranged such that the tablets (1) can move inside and along same, wherein the drum (20) can be rotated by a first power unit (M1), the apparatus (100) comprising mechanical driving means (50) for driving the tablets (1) to promote their movement through the drum (20), said mechanical driving means (50) being located inside the drum (20) and being able to be operated by at least one second power unit (M2), wherein the first power unit (M1) and the at least second power unit (M2) can be controlled separately, although in coordination with one another, and one or both of the drum (20) and the mechanical driving means (50) can be rotated.

## Description

### Technical Field of the Invention

The present invention relates to an apparatus and to methods for coating tablets.

The apparatus is of the type comprising a rotary drum intended for turning over a bed of tablets to be coated placed inside said drum, while at the same time a specific coating product is sprayed on the tablets, and the tablets are subjected to a drying gas stream.

These apparatus are used, for example, for the manufacture of pharmaceutical or confectionary products having a solid core which is coated with a coating product.

### Background of the Invention

The use of apparatus for coating tablets is well known in the pharmaceutical sector. These apparatus essentially comprise a chamber inside which a drum containing the tablets to be coated is rotated.

Generally, the apparatus are equipped with spraying means comprising several sprayers for spraying the product or products with which the tablets located inside the drum are to be coated. This spraying operation is carried out while the drum rotates and turns over the bed of tablets to achieve a homogenous coating on all the tablets.

Conventionally, the drum may have blades located inside same which rotate with the drum, carrying the tablets with them in the lower part of their upward path, lifting them up and allowing them to fall by gravity when they reach the upper part of their upward path, forming a kind of cascade and thereby turning over the bed of tablets inside the drum when it is rotated.

These apparatus also are equipped with a drying system capable of circulating a drying gas stream, typically a hot, dry air stream, through the chamber and through the drum.

The purpose of these apparatus is to apply a coating of a predetermined thickness on the tablets, which coating is generally measured in terms of weight gain, in the most homogenous and efficient manner possible, that is with the shortest operation time and consuming just the right amount of energy and coating product.

In order to improve said efficiency, apparatus particularly designed for continuous operation are known.

In these apparatus, the rotary drum is elongated, i.e., with a length dimension being greater than its width dimension, and the chamber has an inlet for the tablets to be coated adjacent to a first base of the drum and an outlet for coated tablets adjacent to the other base of the drum.

At the nominal manufacturing rate, tablets are fed into the drum through the inlet of the chamber in a sustained manner and coated tablets are removed through the outlet of the chamber in a sustained manner. Between the inlet and the outlet, the tablets are forced to move inside and along the drum, and they are gradually coated with the coating product due to the combined action of the spraying means and of the drying system, while they move forward inside the drum, from the inlet to the outlet.

The forward movement speed of the tablets inside the drum is very important because it determines their residence time inside the drum and the amount of coating product that will be applied thereon.

There are apparatus the rotary drums of which are internally provided, on their side wall, with inclined deflectors which, when rotating the drum, push the tablets towards the outlet. These deflectors are typically helical.

Depending on the characteristics of the tablets (dimensions, shape, weight, hardness, friability, etc.), it is desirable to impart an angular rotation speed to the drum to turn over the bed of tablets that is not the one that promotes the optimal movement speed, or vice versa, it is desirable to impart an angular rotation speed to the drum to promote an optimal movement speed that is not the most suitable to turn over the bed of tablets.

There are apparatus in which, in order to promote the forward movement of the tablets inside the drum, the installation is provided with means for inclining the apparatus to a greater or lesser extent, arranging the bottom of the drum with a slope to take advantage of gravitational force. The intention with this is to promote the movement of the tablets inside the drum separately from, or at least not entirely dependent on, the angular rotation speed imparted to the drum.

This proposal has several drawbacks. Logically, it complicates the construction of the installation and makes it more expensive, since it requires establishing mobile or flexible service connections with the chamber of the apparatus, such as the air ducts, electrical and pneumatic supply connections, etc.. Furthermore, the suitable inclinations are not always the same for all the tablets because, for example, the outer shape of the tablets affects their ability to flow inside the drum.

One object of the invention is to propose an alternative to known coating apparatus.

Another object of the invention is a coating apparatus that overcomes the drawbacks of known apparatus. In this sense, an apparatus in which the movement of the tablets inside the drum at a target speed can be promoted without negatively affecting the manner in which the bed of tablets is turned over, or vice versa, is of interest.

Moreover, operating these apparatus to perform a method for continuously coating is of interest for very large production amounts, in which the apparatus continues operating at the nominal manufacturing rate, without stopping, for many hours/days. This is economically advantageous for manufacturing products with a very low unit cost and high demand (paracetamol, ibuprofen, metformin, to give a few non-limiting examples) that justify this practice.

The internal space of the drum occupied by the tablets may vary between manufacturing formulations.

The internal space of the drum occupied by the tablets may also vary throughout the drum as the layer of coating product applied to the tablets increases in thickness.

This means that the means provided in the apparatus to promote the forward movement of the tablets inside the drum may be optimal for a given space occupied by the tablets, but not optimal for a smaller or larger space occupied by the tablets.

This is a circumstance that has been accepted to date in the field of the invention.

Another object of the invention is an apparatus which, in addition to overcoming the aforementioned drawbacks, also has the ability to adapt the means provided in the apparatus to promote the forward movement of the tablets inside the drum to the space occupied by these tablets.

In other words, an apparatus with means for promoting the movement of tablets inside the drum that are more effective and efficient is desirable; and without sacrificing the other objectives, i.e., without sacrificing the homogenous distribution of the tablets throughout the drum and the ability to promote their movement inside the drum at a target speed without negatively affecting the way in which the bed of tablets is turned over.

### Description of the Invention

The present invention proposes an apparatus according to claim 1.

The apparatus according to claim 1 is an apparatus which can be used to coat tablets and comprises a chamber with an inlet suitable for feeding tablets to be coated and an outlet suitable for removing coated tablets.

The chamber houses a rotary drum, having a perforated wall, arranged such that the tablets can move inside and along the drum between the inlet and the outlet of the chamber, wherein the drum can be rotated by a first power unit; and spraying means, located inside the drum and capable of spraying onto the tablets located inside the drum a product with which the tablets are to be coated.

The apparatus further has a drying system capable of circulating a drying gas stream through the chamber and through the drum.

Essentially, the apparatus is characterised in that it comprises mechanical driving means for driving the tablets to promote their movement through the drum, said mechanical driving means being located inside the drum and being able to be operated by at least one second power unit; and in that the first power unit and the at least one second power unit can be controlled separately, although in coordination with one another, and one or both of the drum and the mechanical driving means can be rotated.

The term tablet is used herein to designate a solid form to be coated, whether in the form of a granulate product, lozenge, pill, dragée, tablet or wafer, and whether it has or has not been obtained by compression of the ingredients thereof.

Advantageously, the apparatus of the invention allows the bed of tablets inside the drum to be agitated, turning them over, by rotating the drum without operating the mechanical driving means for driving the tablets, i.e., without this agitating by turning the tablets over promoting their movement inside and along the drum.

Also advantageously, the apparatus of the invention allows a given movement of the tablets inside and along the drum to be promoted by operating the mechanical driving means for driving the tablets, without rotating the drum, i.e., without agitating the bed of tablets inside the drum by turning them over.

Also advantageously, the apparatus of the invention allows the bed of tablets inside the drum to be agitated, turning them over, by rotating the drum and imparting to the drum an optimal angular speed to that end, and the movement of the tablets inside and along the drum to be promoted by operating the mechanical driving means and imparting to the tablets an optimal forward movement speed, which is not imposed by the angular rotation speed imparted to the drum.

The operation of the drum and of the mechanical driving means for driving the tablets by two different power units makes the apparatus a very versatile apparatus that can better adapt to the characteristics of the tablets to be coated and/or of the coating product with which the tablets and/or the manufacturing formulations are to be coated.

In a variant of the invention, the apparatus comprises a programmable control unit, or stores executable programmes, with instructions for controlling the operation of the first power unit and of the at least second power unit, this control including instructions that trigger actions comprising one or more of start, stop, change of direction of rotation, or change of rotation rate actions.

The terms "comprises", "comprising", or derivates thereof, are interpreted herein in an inclusive manner. This means that when it is stated that a given aspect "comprises" certain elements, it is not limited only to those elements. In other words, the aspect may include other further components in addition to those explicitly mentioned.

The terms "a" and "an" are interpreted herein in an open and inclusive manner. This means that when "a" or "an" is used to describe an element, it is not limited to a single specimen of that element unless otherwise indicated. In other words, the invention may include one or more of those elements.

Accordingly, to give a few non-limiting examples, the invention cover embodiments in which the second power unit may be controlled so that the mechanical driving means are stationary, accelerate or brake to impart to the tablets the suitable movement speed inside and along the drum, whether or not the bed of tablets is being simultaneously turned over, by rotating the drum or leaving it stationary, respectively.

It is thereby possible to control the residence time of the tablets inside the drum between the inlet and the outlet of the chamber when the apparatus is used to perform a method for continuous coating of tablets, or to use the same apparatus to perform a method for batch coating, as will be described in further detail below.

In a variant of the invention, the mechanical driving means comprise a screw conveyor. That is, it has at least one screw and may have more than one screw.

Accordingly, the invention covers a variant in which the mechanical driving means have a single screw conveyor, the invention further contemplating that the screw of this screw conveyor can be rotated by the second power unit; and also another variant in which the mechanical driving means have two screw conveyors, the screws of which can be rotated one by the second power unit and the other one by a third power unit. Naturally, in this latter case the third motor group is intended to be controlled separately from, but in coordination with, the first and the second power units.

In any case, the mechanical driving means comprise at least one screw conveyor and according to one embodiment, the screw of this screw conveyor can be rotated by the second power unit, the screw of the screw conveyor being supported on a rotational attachment for attachment to a positioning mechanism, the positioning mechanism being located outside the drum and configured so as to be capable of imparting to the rotational attachment a displacement with respect to the chamber in a plane transverse to a longitudinal axis of the drum in order to change with same the position of the screw inside the drum.

That is, in addition to being able to rotate the screw separately from, although in a coordinated manner with, the rotation that may be applied to the drum, the invention intends for the position of the screw to be able to be changed inside the drum.

Advantageously, in one variant the apparatus can be adapted to the depth of the bed of tablets. Depending on this depth, there will be more suitable or optimal positions for the screw, sinking more or less into the bed of tablets and making the driving imparted to the tablets more or less effective to displace them inside the drum in a direction in accordance with the direction of rotation of the screw, all this without having to incline the drum for its bottom to be sloped and thereby promoting the displacement of the tablets due to gravity, as is performed in some known installations.

Concerning the positioning mechanism, the invention contemplates that the positioning mechanism is configured to impart to the screw a circular arc-shaped path around the longitudinal axis of the drum and/or a circular arc-shaped path around an axis of rotation parallel to the longitudinal axis. That is, the screw is intended to describe a path around the longitudinal axis of the drum, around an axis of rotation parallel to the mentioned longitudinal axis of the drum, or both at the same time, that is, to describe a circular arc-shaped path around an axis of rotation parallel to the longitudinal axis of the drum which in turn describes a circular arc-shaped path around the longitudinal axis of the drum.

In one form of implementation, the rotational attachment of the screw for attachment to the positioning mechanism is located in a satellite part mounted so as to rotate around the axis of rotation in a main body of the corresponding positioning mechanism, which main body is mounted so as to rotate around the longitudinal axis of the drum in an enclosure of the chamber or in a cover which can be coupled to said enclosure.

In a specific embodiment, the satellite part of the positioning mechanism has an inner side facing the inside of the chamber, and an outer side accessible from the outside of the chamber, on the inner side of which there is secured or formed an arm with a distal end where the corresponding rotational attachment is located; and on the outer side of which the second power unit is firmly secured, the drive shaft of which is on the axis of articulation and goes through the mentioned satellite part, and where appropriate also the main body if necessary, for operating the screw of the screw conveyor by means of a kinematic chain.

The kinematic chain may comprise an assembly with a drive pulley coupled to the drive shaft of the second power unit; a driven pulley coupled to the screw of the screw conveyor; and a transmission belt linking the drive pulley and driven pulley to one another.

When the mechanical driving means comprise a single screw conveyor, it preferably extends along substantially the entire length dimension of the drum.

When the mechanical driving means comprise a single screw conveyor, the screw is preferably supported by two positioning mechanisms, the positioning mechanisms are identical, opposite one another, and located outside the drum and on opposite sides of the drum; the positioning mechanisms are mechanically linked to one another so as to axially align their rotational attachments with the screw.

When the mechanical driving means comprise another screw conveyor, the two screws are each preferably supported on a single rotational attachment for attachment to a respective positioning mechanism, the positioning mechanisms which each support a screw, being similar, opposite one another, and located outside the drum and on opposite sides of the drum, thereby being able to change the position of each screw inside the drum.

As mentioned above, one of the two screws is conceived so that it can be rotated by a third power unit, the third power unit being controllable separately from, although in coordination with, the first and the second power units.

In this embodiment with two screws, each screw can be rotated at an angular speed, and the angular speed may be different between the screws; or only one of the two screws can be rotated, among other possibilities within the scope of the apparatus.

In one way of putting the invention into practice, the positioning mechanisms are configured such that the two screws can be arranged aligned inside the drum; and the screws are complementary with one another so as to extend together along substantially the entire length dimension of the drum.

In one variant, the length of the two screws is different. In one embodiment of this variant, for example, the length of the screw adjacent to the outlet of the chamber is smaller than the length of the screw adjacent to the inlet of the chamber.

The apparatus provides great versatility, notably in that it can operate so as to perform methods for continuous or batch coating.

This gives rise to other aspects to which the invention also relates, such as those described in claims 14 to 17 and which refer to methods for coating which can be performed with an apparatus according to the invention.

Specifically, the invention proposes a method for batch coating of tablets with an apparatus according to the invention, the method comprising a non-transient phase which comprises
- rotating the drum with the first power unit
- spraying on the tablets with the spraying means a product with which the tablets are to be coated,
- subjecting the tablets during the course of being coated with the drying system to a drying gas stream going through the drum,
the method being characterised in that it comprises
- leaving the mechanical driving means for driving the tablets stationary by means of not operating the second, or any other, power unit operating same.

The invention also proposes a method for coating tablets with an apparatus according to the invention characterised in that it comprises a period in which only one of the drum and the mechanical driving means is operated and a period in which both the drum and the mechanical driving means are operated.

The invention also proposes a method for coating tablets, specifically in a continuous manner, with an apparatus according to the invention according to that variant having two screw conveyors, the method being characterised in that it comprises
- rotating the screw of a screw conveyor with the first motor to promote a controlled forward movement of tablets inside the drum in a sector close to the inlet of the chamber, and
- rotating the screw of the other screw conveyor with the third power unit to promote a controlled removal movement of tablets in the drum in a sector close to the outlet of the chamber.

The invention also proposes a method for coating tablets with an apparatus according to the invention in that variant in which the mechanical driving means have at least one screw conveyor, characterised in that it comprises changing the position of the screw of this at least one screw conveyor inside the drum.

### Brief Description of the Drawings

Figure 1 is a generic perspective view of an apparatus according to the invention.
Figure 2 is a view of a first variant of an apparatus according to the invention without the casing and with components that are sectioned or rendered transparent to be able to show parts that would otherwise be concealed.
Figure 3 is a view similar to the view of Figure 2, in this case of a second variant of an apparatus according to the invention.
Figure 4 is a section view of a positioning mechanism of a screw, located inside the drum, of a screw conveyor in an apparatus according to the invention.
Figure 5 is a schematic frontal view of the inside of a drum of an apparatus according to the invention.
Figures 6a and 6b are two schematic views which serve to show a change in position of the screw of a screw conveyor in an apparatus according to the invention.
Figures 7a and 7b are two schematic views which serve to show other changes in position of the screw of a screw conveyor in an apparatus according to the invention.

### Detailed Description of the Invention

The first aspect of the invention is exemplified with two variants of an apparatus, which are the apparatus 100 and 101 of the drawings, sharing common parts and components designated with the same reference numbers in the drawings.

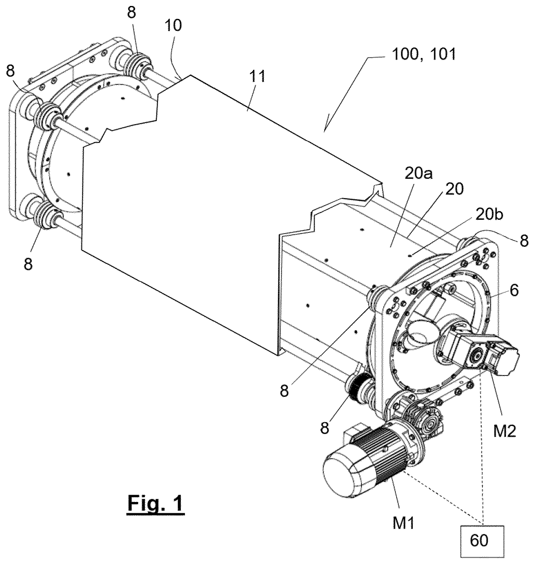

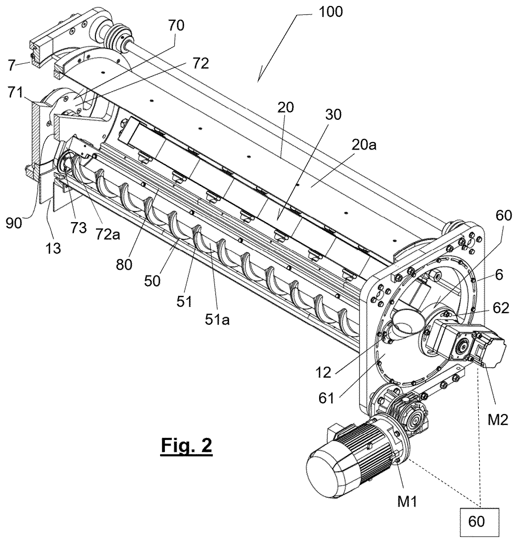

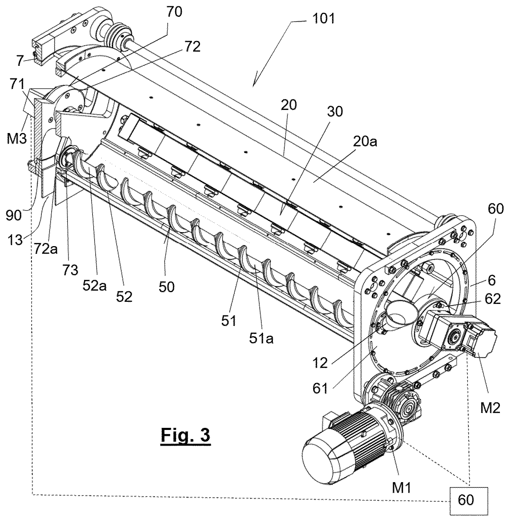

Both apparatus 100 and 101 can have a similar external appearance, such as that illustrated in Figure 1; and their differences can be seen best in Figures 2 and 3, with Figure 2 showing apparatus 100 and Figure 3 showing apparatus 101.

Both apparatus 100 and 101 are apparatus for processing tablets, for example, tablets for pharmaceutical use, which will be agitated while at the same time a coating product is sprayed on same and dried with a drying gas stream.

These operations are carried out inside a chamber 10.

The chamber 10 encloses a rotary drum 20. The drum 20 is a drum having a perforated side wall 20a and open bases. This drum 20 is sized to receive tablets to be coated and to agitate them as the drum 20 is rotated.

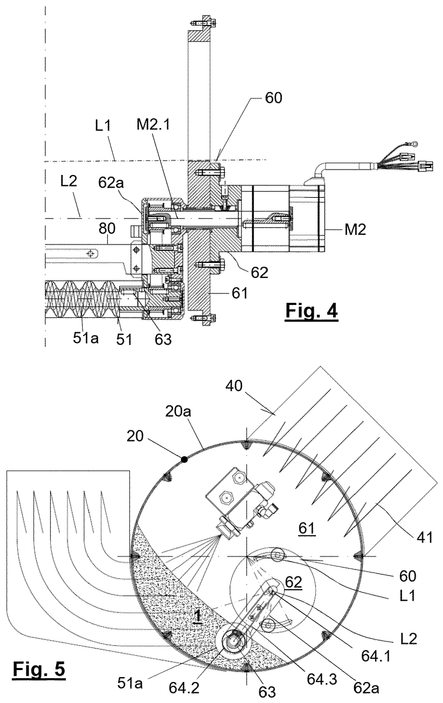

Although other geometries are possible, in specific apparatus 100 and 101 the drum 20 has a generally straight cylindrical shape and is mounted so as to rotate around its longitudinal axis L1 (see Figure 5), intended to be oriented horizontally when the apparatus 100 rests stably on the floor of an installation. In these circumstances, the bottom of the drum 20 is also oriented horizontally and, accordingly, the inclination of the bottom does not promote any preferred displacement of the tablets towards any of its bases when the drum 20 is rotated.

In the specific apparatus 100 and 101, the drum 20 has a length dimension greater than its width dimension. It is therefore an elongated drum 20.

In the specific apparatus 100 and 101, the drum 20 can be rotated by a first power unit M1.

In the specific apparatus 100 and 101, the power unit M1 is firmly secured to a fixed component of the apparatus, outside the chamber 10.

In the specific apparatus 100 and 101, the drum 20 is supported in a floating manner between rotational supports 8, including at least one driving rotational support which, coupled to and rotated by the power unit M1, moves the drum 20 by friction so as to apply thereto a rotational movement around its longitudinal axis L1. However, other solutions are possible, including belt, chain, and rack and pinion drives, to name a few, which does not affect putting into practice the invention.

Though not depicted, the drum 20 may be, and preferably is, provided with agitating means to turn over the bed of tablets inside the drum 20. These agitating means can be of the known type, including blades, paddles or several protrusions secured to or formed on the inner face of the side wall 20a of the drum 20. The specific form of these agitating means does not affect putting into practice the invention. It should be noted, however, that the form of the agitating means should not promote a displacement of the tablets towards either of the bases of the drum 20.

In the specific apparatus 100 and 101, the side wall 20a of the drum 20 is a perforated wall. The dimensions of the perforations 20b must be such that they prevent the tablets from coming out of the drum 20 through said perforations 20b, but appropriately allow the passage of the drying gas through the drum 20. The size, number and distribution of the perforations 20b in the side wall 20a of the drum 20 may vary and does not affect putting into practice the invention and are design variations known to manufacturers based on prior experience.

In the specific apparatus 100 and 101, the chamber 10 is formed by several parts assembled to one another.

In the specific apparatus 100 and 101, among these parts there is a casing 11 laterally surrounding drum 20, and it may have several forms; and there are respective enclosures with covers, i.e., a front cover 6 and a rear cover 7, which can be coupled to the enclosures with each of the covers 6 and 7 being adjacent to a corresponding open base of the drum 20. The precise contour of the covers is not shown in the drawings.

In the specific apparatus 100 and 101, the chamber 10 has an inlet 12 suitable for feeding tablets to be coated, and an outlet 13 suitable for removing coated tablets; and the drum 20 is located in relation to the inlet 12 and to the outlet 13 of the chamber 10 such that the tablets which are fed into the apparatus 100 101 through the inlet 12 are poured into the drum 20 and must move inside and along the entire drum 20 if they are to be removed through the outlet 13.

In the specific apparatus 100 and 101, the inlet 12 is made on the front cover 6, and the outlet 13 is made in the body of the casing 11, on a bottom wall thereof, for discharging tablets going through the barrier 90 due to gravity. However, other configurations are possible.

The apparatus 100 and 101 also have controllable spraying means 30, located inside the drum 20, capable of spraying a product or products with which the tablets are to be coated while they are agitated inside the drum 20.

The spraying means 30 are supplied from outside of the chamber 10. In the apparatus 100 and 101, the spraying means 30 are suspended in the chamber 10, specifically supported on a part of the cover 6 such that they can travel with this front cover 6. This cover 6, or at least the part thereof supporting the spraying means 30, is intended to be able to be displaced in a guided manner between two positions: a closed position of the chamber 10, which seals the chamber 10; and an open position of the chamber 10, which opens the chamber 10 and leaves the adjacent base of the drum 20 at least partially exposed. The cover 6, or at least the part of the cover 6 supporting the spraying means 30, for example, is intended to be able to be displaced in a guided manner in the direction of the longitudinal axis L1 of the drum 20 such that upon displacement towards its open position, it carries the spraying means 30 with it and removes them from the drum 20.

In a known manner, the spraying means 30 have several sprayers that are distributed along the length of the drum 20 when the cover 6, or the part of the cover supporting the spraying means 30, is in its closed position.

The spraying means 30 can be controlled because they are equipped with actuatable means to, for example, regulate the flow rate of the product to be sprayed and to select the sprayers through which the product will be sprayed onto the tablets inside the drum 20.

Both apparatus 100 and 101 also have a controllable drying system 40 capable of circulating a drying gas stream 41 going through the drum 20 to dry the coating recently applied to the tablets.

In a known manner, the drying system 40 has drying gas channelling means suitable for forcing a drying gas stream 41 to go through the drum 20. The drying system 40 is controllable because it is equipped with actuatable means to, for example, redirect and regulate the flow rate of the drying gas 41 going through the drum 20. The constructive solution of the drying system 40 is not part of the present invention and is not explained in further detail as any known system could be used. A drying system 40 has been schematically shown in Figure 5.

The apparatus 100 and 101 also have mechanical driving means 50 for driving the tablets 1 to promote their movement through the drum 20.

Said mechanical driving means 50 are located inside the drum 20 and can be operated separately from the drum 20.

Figure 2 shows internal parts of the apparatus 100. In the specific apparatus 100, the mechanical driving means 50 comprise a single screw conveyor 51, the screw 51a of the screw conveyor 51 being able to be rotated by a second power unit M2. In the specific apparatus 100, the screw 51a of the screw conveyor 51 extends along substantially the entire length of the drum 20 to be able to promote the displacement of tablets inside the drum 20 at any location along the drum 20.

Figure 3 shows internal parts of the apparatus 101. In the specific apparatus 101, the mechanical driving means 50 comprise two screw conveyors 51 and 52, the screw 51a of the screw conveyor 51 being able to be rotated by a second power unit M2 and the screw 52a of the screw conveyor 52 being able to be rotated by a third power unit M3.

In the specific apparatus 101, the screw 51a of the screw conveyor 51 extends along only a part of the length of the drum 20; and the screw 52a of the screw conveyor 52 is complementary with the screw 51a of the first screw conveyor 51 so that the forward movement of the tablets along substantially the entire length of the drum 20 can be promoted either by the screw 51a of the screw conveyor 51 or by the screw 52a of the screw conveyor 52.

In any case, the invention can be carried out with mechanical driving means implemented in a way other than with screw conveyors, for example, with belt conveyors with paddles or buckets, to name one example.

According to the invention, the first power unit M1 operating the drum 20 and the power unit or power units of the mechanical driving means 50 of the apparatus can be controlled separately.

In the specific apparatus 100, for example, the first power unit M1 and the second power unit M2 can be controlled separately, and one or both of the drum 20 and the screw 51a of the screw conveyor 51 can be rotated.

In the specific apparatus 101, for example, the first, second and third power units M1, M2 and M3 can be controlled separately, and the drum 20 may or may not be rotated at the same time as one or both of the screws 51a and 52a of the screw conveyors 51, 52 are rotated.

According to the invention, to coordinate the operation of the power units, the apparatus is provided with a programmable control unit 60. Preferably, the control unit 60 stores executable programmes according to one or more manufacturing formulations selected by an operator. These programmes include instructions for controlling the operation of the power units. These instructions can trigger actions, and these actions can be one or more of at least the start, stop, change of direction of rotation, or change of rotation rate actions. These programmes may include instructions for controlling the operation of the power units according to production parameter values measured in line by sensors provided in the apparatus. The same control unit 60 is preferably prepared for also controlling the spraying means 30 and the drying system 40. Therefore, the programmes may also include instructions, for example, for selecting the sprayers that will spray the product to be coated and to redirect the flow rate of the drying gas, to name a few possible instructions.

In the specific apparatus 100, the control unit 60 is capable of executing programmes which trigger joint actions that cause, for example: the drum 20 not to rotate temporarily and the screw 51a of the screw conveyor 51 to rotate in a first direction that promotes the displacement of the tablets towards the outlet 13 of the chamber 10; the drum 20 not to rotate temporarily and the screw 51a of the screw conveyor 51 to rotate in a second direction that promotes the displacement of the tablets towards the inlet 12 of the chamber 10; the drum 20 to rotate in a first direction temporarily and the screw 51a of the screw conveyor 51 to rotate in the mentioned first direction and then in the mentioned second direction, to give a few non-limiting examples.

In the specific apparatus 101, the control unit 60 is capable of executing programmes which trigger joint actions that promote, for example: only one of the screws 51a or 52a to rotate only temporarily; the two screws 51a and 52a to rotate temporarily in the same direction and at the same rate; the two screws 51a and 52a to rotate temporarily in the same direction but a different rate, to give a few non-limiting examples.

Concerning the nature of the power units, in the specific apparatus 100 and 101 the power unit M1 can be an asynchronous motor, a constant torque motor, a reluctance motor or a servo motor, to name a few possibilities; and the second and third power units M2 and M3 may each be a variable frequency-controlled motor or servo drive motor, stepper motors or brushless motors, to name a few possibilities.

The invention further contemplates that the mechanical driving means 50, in addition to being able to be operated separately from the drum 20, can change position inside the drum 20.

The apparatus 100 and 101 are equipped for such purpose with positioning mechanisms for the screws of the screw conveyors. The positioning mechanisms are all similar.

In the specific apparatus 100, the screw 51a of the screw conveyor 51 is suspended in the chamber 10, specifically it is supported between the front cover 6 and rear cover 7, respectively. In particular, the opposite ends of the screw 51a are each supported on a rotational attachment 63, 73 (only one of which is visible in Figure 2) for attachment to respective positioning mechanisms 60 and 70, the positioning mechanisms 60 and 70 being similar and positioned opposite one another, each positioning mechanism 60, 70 being located outside the drum 20 and configured for imparting in unison to the axially aligned rotational attachments 63, 73 a displacement with respect to the chamber 10 in a plane transverse to the longitudinal axis L1 of the drum 20, and the position of the screw 51a inside the drum 20 can be changed accordingly.

In further detail, in the specific apparatus 100, each rotational attachment 63, 73 can describe a composite path resulting from rotating around an axis of rotation L2, which in turn can be displaced describing a circular arc-shaped path around the longitudinal axis L1, wherein the longitudinal axis L1 and the axis of rotation L2 are parallel.

For such purpose, each positioning mechanism 60, 70 comprises a satellite part 62, 72 mounted so as to rotate in a main body 61, 71 and around the axis of rotation L2, the main body 61, 71 in turn being mounted so as to rotate in a corresponding enclosure of the chamber 10, in the example being mounted so as to rotate in the covers 6 and 7.

In the apparatus 100, the satellite parts 62, 72 have an inner side facing the inside of the chamber 10, and an outer side accessible from the outside of the chamber 10. The inner side of each satellite part 62, 72 has an extension in the form of an arm 62a, 72a (only one of which is visible in Figure 2) with a distal end where the respective rotational attachments 63, 73 with the screw 51a are located.

In the apparatus 100, to assist in the synchronised movement of the rotational attachments 63, 73, the apparatus 100 is provided with connecting rod 80 firmly secured to both satellite parts 62, 72, specifically to their arms 62a, 72a.

As illustrated in Figure 4, which is a detail of the positioning mechanism 60, on the outer side of the satellite part 62 of the positioning mechanism 60, the second power unit M2 is firmly secured, the drive shaft M2.1 of which is on the axis of rotation L2 and goes through the satellite part 62 for operating the screw 51a of the screw conveyor 51 by means of a kinematic chain.

Though not depicted, a modality of the apparatus 100 is provided in which the screw 51a of the single screw conveyor 50 is supported on a rotational attachment by just one of its ends, for example, located on the arm 62a of the satellite part 62 of the positioning mechanism 60. In this modality of the apparatus 100, the positioning mechanism 70, and therefore also the connecting rod 80, may be dispensed with.

The specific apparatus 101 of Figure 3 is, conceptually speaking, the result of splitting or separating the screw of the apparatus 100 of Figure 2 into two parts, giving rise to the screw 51a rotationally supported by the positioning mechanism 60 and to the screw 52a rotationally supported by the positioning mechanism 70.

In fact, each screw 51a, 52a is supported on a corresponding rotational attachment 63, 73 for attachment to a corresponding positioning mechanism 60 and 70, the positioning mechanisms 60 and 70 being similar and positioned opposite one another, as in the apparatus 100 of Figure 2, with each positioning mechanism 60, 70 being located outside the drum 20 and each configured to impart to the associated rotational attachment a displacement with respect to the chamber 10 in a plane transverse to the longitudinal axis L1 of the drum 20, and the position of the screws 51a and 52a inside the drum 20 can be changed accordingly and independently.

In the apparatus 101, in addition to having the power unit M2, on the outer side of the satellite part 72 of the positioning mechanism 70 there is a third power unit M3 firmly secured, the drive shaft of which is on the axis of rotation L2 and goes through the satellite part 72 for operating the screw 52a of the screw conveyor 52 by means of a kinematic chain, similar to the one already described for operating the screw 51a.

Two modalities are conceived for the apparatus 101: one in which the screws 51a and 52a are displaced inside the drum 20 in unison, contemplating that to assist in this synchronised movement the apparatus 101 is provided with a connecting rod 80 firmly secured to the satellite parts 62, 72, specifically to their arms 62a, 72a, of the positioning mechanisms 60 and 70; and another modality, which is depicted, in which each screw 51a and 52a can be displaced inside the drum 20 separately, and in this case each main body 61, 71 can rotate independently of one another, and each satellite part 62, 72 can also rotate independently of one another.

In either of these two modalities, it is contemplated that the helices on the screws 51a and 52a can be the same or different.

The mobility of a screw in a screw conveyor inside the drum 20 in any of the apparatus 100 and 101, and in any of their modalities, is schematically illustrated in Figures 5, 6a and 6b; and 7a and 7b.

The invention can be carried out by manual or motorised movement of the moving parts of the positioning mechanism or positioning mechanisms of the apparatus. For example, the main body or bodies in question and/or the satellite part or parts in question may be moved manually or in an assisted manner, using motors for such purpose. In any case, the apparatus is provided with visible markings to know the relative and/or absolute position of the moving parts.

Figure 5 is a schematic frontal view of the inside of the drum 20 showing a location of the spraying means 30 and of the function provided by the drying system 40, having depicted to that end the flow lines of a drying gas stream 41 going through the drum 20.

Figure 5 also serves to locate the longitudinal axis L1 and the axis of rotation L2, parallel and shifted with respect to one another; as well as the rotational attachment 63 of a screw, in this case specifically of the screw 51a in the positioning mechanism 60 and more specifically on the arm 62a of the satellite part 62 that is rotational around the axis of rotation L2, which satellite part 62 travels together with the main body 61 of the positioning mechanism 60 as said main body 61 is rotated around the longitudinal axis L1.

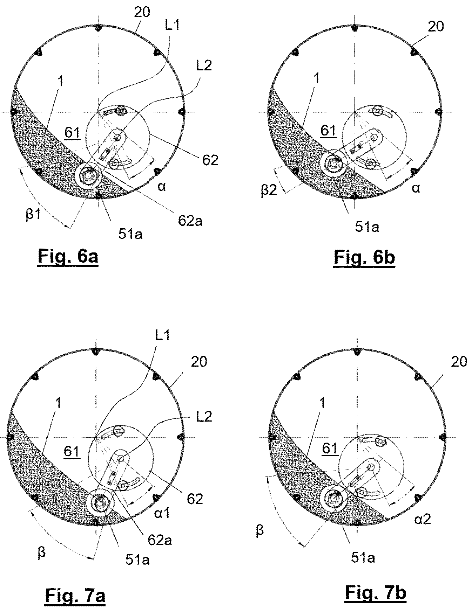

The possibility of changing the position of the screw 51a inside the drum 20 is shown best in Figures 6a and 6b; and 7a and 7b.

To that end, Figures 6a and 6b show a change in position of the screw 51a in the event of rotating the satellite part 62 around the axis of rotation L2 in a clockwise direction in reference to the drawings, keeping the position of the main body 61 of the positioning mechanism 60 constant. The displacement of the screw 51a is reflected in Figures 6a and 6b, indicating a constant angle α and a change in the angle β.

Figures 7a and 7b show a change in position of the screw 51a in the event of rotating the main body 61 around the axis of rotation L1 in a clockwise direction in reference to the drawings, taking the satellite part 62 with it without changing the relative position between the main body 61 and the satellite part 62. The displacement of the screw 51a is reflected in Figures 6a and 6b, indicating a constant angle β and a change in the angle α.

It is apparent that by combining rotations with respect to the longitudinal axis L1 and with respect to the axis of rotation L2, that is, by rotating the main body and changing the relative position between the main body and the satellite part, the screw 51a may be arranged in space inside the drum 20 in a desired position.

This desired position may be an optimal position to promote the movement of the tablets towards one end of the drum or the other, for example, according to the space occupied by the tablets inside the drum.

Advantageously, furthermore, in that variant of the apparatus with two screws, there could be two optimal positions of two screws in different sectors of the drum. For example, it could be the case that the apparatus 101 is operated to perform a method for continuously coating and the movement of the tablets is promoted so that they move forward along the entire drum from a first end to a second end thereof, with the volume of the tablets changing along the drum as they are sprayed with coating product. In this case, the apparatus 101 will provide the possibility of locating the screws 51a and 52a in different positions inside the drum.

In the apparatus 100 and 101, the kinematic chain by means of which each power unit transmits to a screw of a screw conveyor a rotation can be like the kinematic chain 64 illustrated in the schematic view of Figure 5.

The specific kinematic chain 64 comprises a drive pulley 64.1 coupled to the drive shaft of the power unit in question; a driven pulley 64.2 coupled to the screw of the screw conveyor in question; and a transmission belt 64.3 linking the drive pulley 64.1 and driven pulley 64.2 to one another.

Both apparatus 100 and 101 in any of their modalities are versatile apparatus that enable the operator to operate the apparatus to perform a method for continuous coating or a method for batch coating.

Two different ways of operating the apparatus 100 are described below and are merely exemplary, as this apparatus may also operate in other ways.

### Continuous operation mode

- At a nominal production rate, tablets are fed into the drum 20 of the apparatus 100 in a continuous and sustained manner through the inlet 12. To that end, automatic loading and metering systems (star valves, bucket conveyors, variable speed conveyors, etc.) of a known type are used. The drum 20 is rotated by the power unit M1. The rotational movement of the drum 20 causes the bed of tablets inside the drum to be turned over in a suitable manner. The power unit M1 is controlled to impart sustained angular rotation speed to the drum 20, which is pre-established according to the manufacturing formulation.

The screw 51a of the screw conveyor 51 is rotated by the power unit M2. The rotational movement of the screw 51a promotes the forward movement of the tablets along the drum towards the outlet 13. The power unit M2 is controlled to impart sustained angular rotation speed to the screw 51a, which is pre-established according to the manufacturing formulation.

The sprayers 31 of the spraying means 30 spray a coating product onto the tablets. The coating on the tablets will increase in weight/thickness as they move forward inside the drum 20.

For the same control of the spraying means 30, the higher rotation speed of the screw 51a the greater will be the forward movement speed of the tablets, and therefore the less time they will be exposed to the range of the sprayers, and therefore the less thick the coating layer will be.

The tablets which reach and go through the barrier 90, driven by the screw 51a, fall out at the outlet 13, being removed from the apparatus 100 due to gravity.

The control unit 60 controls the operation of the first power unit M1, of the second power unit M2, of the spraying means 30 and of the drying system 40 in a coordinated manner, according to the manufacturing formulation.

### Batch operation mode

- At a nominal production rate, the screw 51a is stationary and the drum 20 is rotated by the first power unit M1. The rotational movement of the drum 20 causes the bed of tablets previously fed into the drum 20 to be turned over in a suitable manner. The first power unit M1 is controlled to impart a sustained angular rotation speed to the drum 20, which is pre-established according to the manufacturing formulation.

The sprayers 31 of the spraying means 30 spray a coating product onto the tablets. The coating on the tablets will increase in weight/thickness over time.

The control unit 60 controls the operation of the first power unit M1, of the spraying means 30 and of the drying system 40 in a coordinated manner, according to the manufacturing formulation.
- At a transient loading rate, a batch of tablets is fed into the drum 20 of the apparatus 100 through the inlet 12 while the drum 20 is rotated by the first power unit M1 and the screw 51a is rotated by the second power unit M2 in a direction that promotes the displacement of the tablets that are gradually fed into the drum towards the outlet 13 to uniformly distribute the tablets along the drum 20 without unloading, i.e., without the tablets going through the barrier 90.

The control unit 60 controls the operation of the first power unit M1, of the second power unit M2, and in this case the non-operation of the spraying means 30 and of the drying system 40 in a coordinated manner, according to the manufacturing formulation.
- At a transient discharge rate, the drum 20 is rotated by the first power unit M1 and the screw 51a of the screw conveyor 51 is rotated by the second power unit M2. The rotational movement of the screw 51a promotes the forward movement of the tablets inside the drum towards the outlet 13. The tablets that reach and go through the barrier 90 fall out at the outlet 13, being removed from the apparatus 100 due to gravity. For such purpose, the mentioned barrier 90 is provided with a through passage for the tablets, which require a push to go through said passage.

The control unit 60 controls the operation of the first power unit M1, of the second power unit M2, and in this case the non-operation of the spraying means 30 and optionally of the drying system 40 in a coordinated manner, according to the manufacturing formulation.

Some ways of operating the apparatus 101 with two screws are described below and are merely exemplary, as this apparatus may also operate in other ways.

### Batch operation mode

- At a transient loading rate, the screw 51a of the screw conveyor 51 is rotated continuously by the second power unit M2 to homogeneously distribute along the drum the tablets which are gradually fed through the inlet 12 while the screw 52a of the screw conveyor 52 remains stationary.

The control unit 60 controls the operation of the second power unit M2 and in this case the non-operation of the third power unit M3 and preferably the non-operation of the spraying means 30 and optionally of the drying system 40 in a coordinated manner, according to the manufacturing formulation.
- At a transient discharge rate, the screw 52a of the screw conveyor 52 is rotated continuously by the third power unit M3, while the screw 51a of the screw conveyor 51 is rotated by the second power unit M2 intermittently or at intervals. The tablets that reach and go through the barrier 90 subject to the influence of the screw 52a fall out at the outlet 13, being removed from the apparatus 100 due to gravity.

The control unit 60 controls the operation of the second power unit M2 and of the third power unit M3, and in this case the non-operation of the spraying means 30 and optionally of the drying system 40 in a coordinated manner, according to the manufacturing formulation.

## Claims

1. An apparatus (100, 101) for coating tablets (1), comprising a chamber (10) with an inlet (12) suitable for feeding tablets to be coated and an outlet (13) suitable for removing coated tablets, the chamber (10) housing
- a rotary drum (20), having a perforated wall (21), arranged such that the tablets (1) can move inside and along same between the inlet (12) and the outlet (13) of the chamber (10), wherein the drum (20) can be rotated by a first power unit (M1),
- spraying means (30), located inside the drum (20) and capable of spraying onto the tablets (1) located inside the drum a product with which the tablets are to be coated,
the apparatus (100) further having
- a drying system (40), capable of circulating a drying gas stream (41) through the chamber (10) and through the drum (20),
the apparatus (100) being **characterised in that**
- it comprises mechanical driving means (50) for driving the tablets (1) to promote their movement through the drum (20), said mechanical driving means (50) being located inside the drum (20) and being able to be operated by at least one second power unit (M2), and **in that**
- the first power unit (M1) and the at least second power unit (M2) can be controlled separately, although in coordination with one another, and one or both of the drum (20) and the mechanical driving means (50) can be rotated.

2. The apparatus (100, 101) according to claim 1, **characterised in that** it comprises a programmable control unit (60), or stores executable programmes, with instructions for controlling the operation of the first power unit (M1) and of the at least second power unit (M2), this control including instructions that trigger actions comprising one or more of at least start, stop, change of direction of rotation, or change of rotation rate actions.

3. The apparatus (100, 101) according to any one of claims 1 or 2, **characterised in that** the mechanical driving means (50) comprise at least one screw conveyor (51)
- the screw (51a) of the screw conveyor (51) being able to be rotated by the second power unit (M2),
- the screw (51a) of the screw conveyor (51) being supported on at least one rotational attachment (63) for attachment to a positioning mechanism (60)
- the positioning mechanism (60) being located outside the drum (20),
- and the positioning mechanism (60) being configured so as to be capable of imparting to the rotational attachment (63) a displacement with respect to the chamber (10) in a plane transverse to a longitudinal axis (L1) of the drum (20) in order to change with same the position of the screw (51a) inside the drum (20).

4. The apparatus (100, 101) according to claim 3, **characterised in that** the positioning mechanism (60) is configured for the displacement of the rotational attachment (63) to describe a circular arc-shaped path around the longitudinal axis (L1) of the drum (20).

5. The apparatus (100, 101) according to claim 3, **characterised in that** the positioning mechanism (60) is configured for the displacement of the rotational attachment (63) to describe a circular arc-shaped path around an axis of rotation (L2) parallel to the longitudinal axis (L1) of the drum (20).

6. The apparatus (100, 101) according to claims 4 and 5, **characterised in that** the positioning mechanism (60) is configured for the displacement of the rotational attachment (63) to describe a circular arc-shaped path around an axis of rotation (L2) parallel to the longitudinal axis (L1) which in turn describes a circular arc-shaped path around the longitudinal axis (L1) of the drum (20).

7. The apparatus (100, 101) according to claim 6, **characterised in that** the rotational attachment (63) is located in a satellite part (62) mounted so as to rotate around the axis of rotation (L2) in a main body (61) of the positioning mechanism (60), which main body (61) is in turn mounted so as to rotate around the longitudinal axis (L1), in an enclosure of the chamber (10) or in a cover (6) which can be coupled to said enclosure.

8. The apparatus (100, 101) according to claim 7, **characterised in that** the satellite part (62) of the positioning mechanism (60) has an inner side facing the inside of the chamber (10), and an outer side accessible from the outside of the chamber (10), on the inner side of which there is secured or formed an arm (62a) with a distal end where the rotational attachment (63) is located; and on the outer side of which the second power unit (M2) is firmly secured, the drive shaft (M2.1) of which is on the axis of articulation (L2) and goes through the mentioned satellite part (62) for operating the screw (51a) of the screw conveyor (51) by means of a kinematic chain (64).

9. The apparatus (100, 101) according to claim 8, **characterised in that** the kinematic chain (64) comprises a drive pulley (64.1) coupled to the drive shaft (M2.1) of the second power unit (M2); a driven pulley (64.2) coupled to the screw (51a) of the screw conveyor (51); and a transmission belt (64.3) linking the drive pulley (64.1) and driven pulley (64.2) to one another.

10. The apparatus (100) according to any one of claims 3 to 9, **characterised in that** it comprises a single screw conveyor (51), the screw (51a) of which extends along substantially the entire length dimension of the drum (20).

11. The apparatus (100) according to claim 10, **characterised in that**
- the screw (51a) of the screw conveyor (51) is supported on another rotational attachment (73) for attachment to another positioning mechanism (70),
- the positioning mechanisms (60, 70) are identical, opposite one another, and located outside the drum (20) on opposite sides of the drum,
- the positioning mechanisms (60, 70) are mechanically linked to one another so as to axially align their rotational attachments (63, 73) with the screw (51a).

12. The apparatus (101) according to any one of claims 3 to 9, **characterised in that** the mechanical driving means (50) comprise another screw conveyor (52),
- wherein the screw (51a, 52a) of each screw conveyor (51, 52) is supported on a single rotational attachment (63, 73) for attachment to a respective positioning mechanism (60, 70),
- wherein the positioning mechanisms (60, 70) are identical, opposite one another, and located outside the drum (20) on opposite sides of the drum, thereby being able to change the position of each screw (51a, 52a) inside the drum (20),
- wherein the screw (52a) of a screw conveyor (52) can be rotated by a third power unit (M3),
- the third power unit (M3) being controllable separately from, although in coordination with, the first and the second power units (M1, M2).

13. The apparatus (101) according to claim 12, **characterised in that** the positioning mechanisms (60, 70) are configured such that the associated screws (51a, 52a) can be arranged aligned inside the drum (20); and **in that** the screws (51a, 52a) are complementary with one another so as to extend together along substantially the entire length dimension of the drum (20)

14. A method for batch coating of tablets (1) with an apparatus (100, 101) according to any one of claims 1 to 13, the method comprising a non-transient phase which comprises
- rotating the drum (20) with the first power unit (M1),
- spraying on the tablets (1) with the spraying means (30) a product with which the tablets are to be coated,
- subjecting the tablets during the course of being coated with the drying system (40) to a drying gas stream (41) going through the drum (20),
the method (100) being **characterised in that** it comprises
- leaving the mechanical driving means (50) for driving the tablets (1) stationary.

15. **The** method for coating tablets (1) with an apparatus (100, 101) according to any one of claims 1 to 13, **characterised in that** it comprises a period in which only one of the drum (20) and the mechanical driving means (50) is operated and a period in which both the drum (20) and the mechanical driving means (50) are operated.

16. **The** method for continuous coating of tablets (1) with an apparatus (101) according to claim 12 or 13, the method (100) being **characterised in that** it comprises
- rotating the screw (51a) of a screw conveyor (51) with the first power unit (M2) to promote a controlled forward movement of tablets (1) inside the drum (20) in a sector close to the inlet (12) of the chamber (10), and
- rotating the screw (52a) of the other screw conveyor (52) with the third power unit (M3) to promote a controlled removal movement of tablets (1) in the drum (20) in a sector close to the outlet (13) of the chamber (10).

17. **The** method for coating tablets (1) with an apparatus (100, 101) according to any one of claims 3 to 13, **characterised in that** it comprises changing the position of a screw (51a) of a screw conveyor (51) inside the drum (20).
